# EUROPÄISCHE PATENTSCHRIFT

(11) **EP 1 404 730 B1**
(45) Veröffentlichungstag und Bekanntmachung des Hinweises auf die Patenterteilung: **02.08.2006**
(21) Anmeldenummer: 02771644.8
(22) Anmeldetag: 14.05.2002
(51) Int. Cl.: C08F 297/04, C08F 8/04, C08L 53/02, C08L 25/06

(54) **KERNHYDRIERTE BLOCKCOPOLYMERE MIT ASSYMETRISCHEM AUFBAU**
CORE-HYDROGENATED BLOCK COPOLYMERS HAVING AN ASYMMETRIC STRUCTURE
COPOLYMERES GREFFES A NOYAU HYDROGENE, DE STRUCTURE ASYMETRIQUE

(30) Priorität: 18.05.2001 DE 10124254
(43) Veröffentlichungstag der Anmeldung: 07.04.2004
(73) Patentinhaber: BASF Aktiengesellschaft, 67056 Ludwigshafen (DE)
(72) Erfinder: KNOLL, Konrad, 67069 Ludwigshafen (DE); BÖTTCHER, Arnd, 67227 Frankenthal (DE); ISHAQUE, Michael, 68309 Mannheim (DE); OSSWALD, Friederike, 68163 Mannheim (DE); ARNDT, Jan-Dirk, 68167 Mannheim (DE)
(86) Internationale Anmeldenummer: PCT/EP2002/005260
(87) Internationale Veröffentlichungsnummer: WO 2002/094899

(56) Entgegenhaltungen:
- WO-A-00/77054
- FR-A- 1 516 786
- US-A- 4 335 221
- US-A- 5 302 667

## Beschreibung

Die Erfindung betrifft kernhydrierte Blockcopolymere aus vinylaromatischen Monomeren und Dienen, Verfahren zur Ihrer Herstellung sowie Mischungen mit kernhydriertem Polystyrol.

Styrol-Butadien- und Styrol-Isopren-Blockcopolymere können zu Polymeren mit unterschiedlichen Eigenschaften hydriert werden, beispielsweise mit verbesserter Alterungs- oder Witterungsbeständigkeit. Je nach Hydrierbedingungen können hierbei selektiv (US 4,882,384) die olefinischen Doppelbindungen oder sowohl die olefinischen als auch die aromatischen Doppelbindungen hydriert werden (US 3,333,024, US 3,431,323, US 3,598,886).

Die WO 94/21694 beschreibt beispielsweise die Hydrierung von Polystyrol oder Styrol-Butadien- oder Styrol-Isopren-Blockcopolymeren an geträgerten Metallkatalysatoren. Unter den Reaktionsbedingungen werden neben dem Dienblock auch die Phenylgruppen des Polystyrolblocks hydriert. Aus dem Polystyrolblock entsteht auf diese Weise ein Polyvinylcyclohexylblock (PVCH).

Einen verbesserten Hydrierkatalysator zur Kernhydrierung von Styrolpolymerisaten beschreibt die WO 96/34896. Als Ausgangsmaterial für die Kernhydrierung werden dort neben Polystyrol auch Styrol-Butadien- bzw. Styrol-Isopren- Zwei-und Dreiblockpolymere beschrieben. Weiterhin ist die Hydrierung von Styrol-Butadien- bzw. Styrol-Isopren-Blockcopolymeren mit 3 bzw. 5 Blöcken (WO 00/32646, WO 00/56783, WO 01/12681) sowie die Hydrierung von sternförmigen Styrol-Butadien-Blockcopolymeren (WO 01/23437) beschrieben.

Aus der EP-A 505 110 sind hydrierte Mischungen aus Styrol-Butadien-Blockcopolymeren und Polystyrol für optische Speichermedien bekannt.

Aufgabe der vorliegenden Erfindung war die Bereitstellung von kernhydrierten Blockcopolymeren, die vor allem in Abmischung mit kernhydriertem Polystyrol neben einem sehr guten Zähigkeits-Steifigkeitsverhältnis und einer exzellenter Transparenz auch eine hohe Wärmeformbeständigkeit aufweisen. Ferner sollten Sie eine gute Verträglichkeit mit hydriertem Polystyrol aufweisen, um homogene Mischungen mit exzellenter Transparenz zu ermöglichen.

Demgemäß wurden kernhydrierte Blockcopolymere aus vinylaromatischen Monomeren und Dienen gefunden, wobei die Blockcopolymeren mindestens zwei Blöcke S mit unterschiedlichem Molekulargewicht aus vinylaromatischen Monomeren aufweisen.

Die kernhydrierten Blockcopolymere enthalten einen Block S₁ mit einem Molekulargewicht Mₙ von mindestens 30 000 g/mol und einen Block S₂ mit einem Molekulargewicht Mₙ im Bereich von 5 000 bis 25 000 g/mol. Besonders bevorzugt besitzt der Block S₁ ein Molekulargewicht Mₙ im Bereich von 30 000 bis 100 000 g/mol und der Block S₂ ein Molargewicht Mₙ im Bereich von 10 bis 25.000 g/mol.

In der Regel liegt der Hydriergrad der olefinischen Doppelbindungen bei 97 % und höher, der Hydrierungsgrad der vinylaromatischen Monomeren beträgt bevorzugt mindestens 90 %, besonders bevorzugt mindestens 95 insbesondere 98 %.

Weiterhin werden kernhydrierte Blockcopolymere bevorzugt, deren Anteil der Dieneinheiten vor der Hydrierung höchstens 50 Gew.-%, bezogen auf das gesamte Blockcopolymer, beträgt.

Die einpolymerisierten Dieneinheiten sollten vorzugsweise vor der Hydrierung zu mehr als 30 %, bevorzugt 35 - 50 %, bezogen auf die Summe der Dieneinheiten, in der 1,2-Vinylform vorliegen.

Als vinylaromatische Monomere können beispielsweise Styrol, alpha-Methylstyrol, kernalkylierte Styrole wie p-Methylstyrol oder Tertiärbutylstyrol, oder 1,1-Diphenylethylen oder Mischungen davon eingesetzt werden.

Bevorzugte Diene sind Butadien, Isopren, 2,3-Dimethylbutadien, 1,3-Pentadien, 1,3-Hexadien oder Piperylen oder deren Mischungen; besonders bevorzugt sind Butadien und Isopren.

Neben den Blöcken S aus vinylaromatischen Monomeren können die Blockcopolymeren vor der Hydrierung einen reinen Dienblock B oder einen Copolymerblock S/B aus vinylaromatischen Monomeren und Dienen aufweisen. Der Copolymerblock kann eine statistische Verteilung oder einen Monomergradienten aufweisen.

Die Blockcopolymeren können durch bekannte sequenzielle anionische Polymerisation der vinylaromatischen Monomeren und Dienen in Kohlenwasserstoffen, bevorzugt Cycloaliphaten wie Cyclohexan, Methylcyclohexan, Cyclopentan oder Benzol hergestellt werden. Besonders bevorzugt ist Cyclohexan. Hierzu wird üblicherweise ein lithiumorganischer Initiator, wie n-Butyllithium oder s-Butyllithium etc. verwendet.

Die Polymerisation kann mit einem protischen Terminierungsmittel, beispielsweise Wasser, Alkohole wie Methanol oder Ethanol, Kohlendioxid, oder einem Kopplungsmittel terminiert werden. Vorzugsweise besitzt das Kopplungsmittel eine Funktionalität von 3 bis 5, um sternförmige Blockcopolymere herzustellen. Beispiele hierfür sind epoxidierte Fettsäureester wie epoxidiertes Leinsamenöl oder epoxidiertes Sojabohnenöl.

Der Anteil der einpolymerisierten Dieneinheiten, der in der 1,2-Vinylform vorliegt, kann durch die Zugabe von Substanzen mit Dauereigenschaften, wie Ether oder Amine, gezeugt werden.

Bevorzugt werden hierfür Tetrahydrofuran, Dimethoxyethan oder 2-Alkylfurfurylether in Mengen von 0,1 bis 1 Vol.-%, insbesondere 0,25 bis 0,5 Vol.-%, bezogen auf den als Lösungsmittel verwendeten Kohlenwasserstoff, z.B. Cyclohexan.

Durch die Gegenwart dieser Substanzen oder von Kaliumsalzen, wie Kaliumalkoholate von tertiären Alkoholen mit mindestens 7 Kohlenstoffatomen als Randamizer kann auch die statistischen Verteilung der vinylaromatischen Monomeren und Dienen in den Copolymerblikken S/B erweist werden.

Anschließend an die Herstellung des Blockcopolymeren werden die ungesättigten Bindungen der Dieneinheiten und auch der vinylaromatischen Einheiten des Blockcopolymeren mit einem Hydrierkatalysator hydriert. Bevorzugt werden geträgerte Hydrierkatalysatoren eingesetzt. Als Trägermaterial eignen sich beispielsweise anorganische Substrate wie Bariumsulfat, Silikate, Kohlenstoff oder Aluminiumoxide. Geeignete Hydriermetalle sind beispielsweise Nickel, Kobalt, Rhodium, Ruthenium, Palladium, Platin oder andere Metalle der Gruppe 8.

Die Hydrierung erfolgt bevorzugt in einem gesättigten Kohlenwasserstoff als Lösungsmittel, in welchem das Blockcopolymere löslich ist. Bevorzugt werden cycloaliphatische Kohlenwasserstoffe, insbesondere Cyclohexan. Sinnvollerweise wird das gleiche Lösungsmittel wie bei der Polymerisation verwendet, so dass die Hydrierung in einem Verfahrensschritt, der sich an die Polymerisation anschließt, erfolgen kann. Die Hydrierung kann diskontinuierlich oder kontinuierlich erfolgen, bevorzugt ist eine kontinuierliche Hydrierung an einem Festbettkatalysator.

Die Hydrierung erfolgt im allgemeinen bei Temperaturen im Bereich von 40°C bis 250°C, besonders bevorzugt im Bereich von 120°C bis 180°C. Die Hydrierung kann bei Normaldruck bis 350 bar bevorzugt im Bereich von 100 bis 250 bar durchgeführt werden.

Die Blockcopolymeren können linear oder sternförmig aufgebaut sein. Das Molekulargewicht Mₙ des gesamten Blockcopolymeren liegt in der Regel im Bereich von 50 000 bis 300 000 g pro mol, bevorzugt im Bereich von 80 000 bis 250 000 g pro mol.

Bevorzugt werden lineare Blockcopolymere der Struktur S-B-S/B-S, S₁-B-S/B-S₂, S₁-B-S₂, S₁-(S/B)₁-(S/B)₂-S₂ und S₁-(S/B)-B-S₂. Ebenfalls bevorzugt sind die sternförmigen Strukturen S₁-B-X-B-S₂, S₁-(S/B)-B-X-B-(S/B)-S₂ und S₁-(S/B)₁-(S/B)₂-X-(S/B)₂-(S/B)₁-S₂, wobei
- S: für einen vinylaromatischen Polymerblock,
- B: für einen Dienblock,
- S/B: für einen Copolymerblock aus vinylaromatischen Monomeren und Dien, bevorzugt mit statistischer Verteilung der Monomeren
- X: für ein oligofunktionelles Kopplungsmittel stehen, und die Indizes 1 und 2 für Blöcke mit unterschiedlichem Molekulargewicht oder unterschiedliche Monomerzusammensetzung stehen.

Die sternförmigen Blockcopolymeren können zum Beispiel durch zwei- oder mehrfache Initiatorzugabe und gleichzeitiger oder unmittelbar folgender Zugabe von vinylaromatischen Monomeren hergestellt werden. Das Initiatorverhältnis der einzelnen Initiatorzugaben richtet sich nach dem gewünschten Verhältnis der einzelnen Sternäste. Bei zweifacher Initierung wird das Initiatorverhältnis I₁/I₂ bevorzugt im Bereich von 0,1 bis 1, insbesondere im Bereich von 0,2-0,8 gewählt.

Die Menge der gemeinsamen mit dem Initiator zugegebenen vinylaromatischen Monomeren bestimmen das Molekulargewicht Mₙ der endständigen Blöcke z.B. S₁ und S₂.

Die anschließenden Zugaben von Monomeren, Monomermischungen oder Kupplungsmittel erfolgen in der Regel nach der vollständigen Umsetzung der vorausgehenden Zugabe. Typische Zugabesequenzen der Initiatoren I, vinylaromatischen Monomeren S, Diene B und Kupplungsmittel KM und die resultierenden Strukturen sind in Tabelle 1 zusammengestellt.

Im Stern 5 können anstelle der Zugabesequenz 4 oder zusätzliche Zugaben von vinylaromatischen Monomeren S und Dienen B einzeln oder gemeinsam erfolgen.

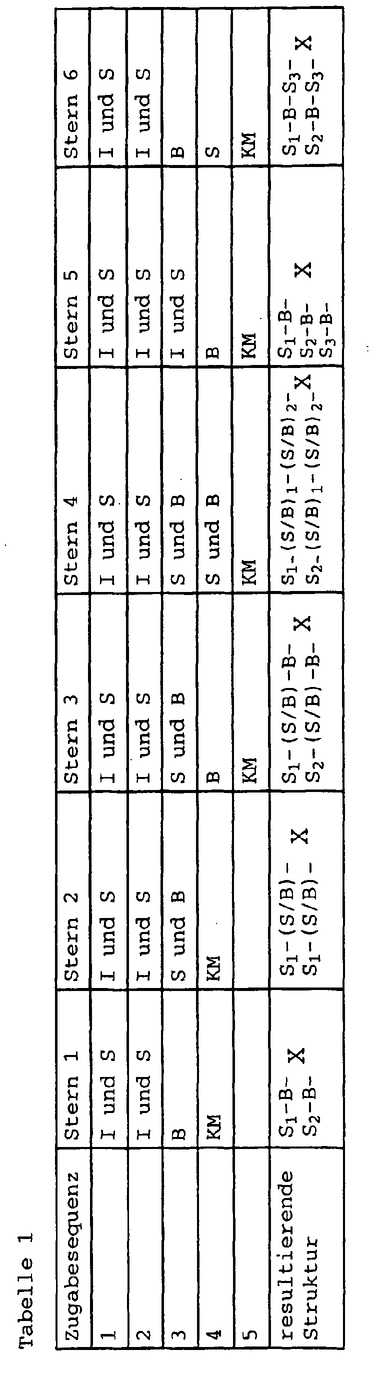

Des Weiteren betrifft die Erfindung Mischungen aus kernhydrierten Blockcopolymeren und kernhydrierten Polyvinylaromaten, bevorzugt Polystyrol. Bevorzugt werden Mischungen, die 10 bis 90 Gew.-% des kernhydrierten Blockcopolymeren und 90 - 10 Gew.-% kernhydriertes Polystyrol enthalten. Diese Mischungen können beispielsweise durch Mischen der kernhydrierten Blockcopolymeren und des kernhydrierten Polystyrols in geeigneten Mischaggregaten, beispielsweise Extruder oder statischen Mischern oder durch Kernhydrierung eine Mischung von S/B-Blockcopolymer mit GPPS hergestellt werden.

Die erfindungsgemäßen kernhydrierten Blockcopolymeren und Mischungen mit kernhydriertem Polystyrol eignen sich für alle Anwendungen, bei denen üblicherweise Polycarbonat eingesetzt wird, beispielsweise zur Herstellung von optischen Speichermedien.

Die erfindungsgemäßen kernhydrierten Blockcopolymeren zeigen ein gutes Zähigkeits-/Steifigkeitsverhältnis bei hoher Wärmeformbeständigkeit und weisen darüber hinaus eine sehr gute Mischbarkeit mit kernhydriertem Polystyrol (Polyvinylcyclohexan) auf. Solche Mischungen besitzen eine exzellente Transparenz bei ausgezeichnetem Zähigkeits-Steifigkeitsverhältnis.

### Beispiele

Der Polybutadiengehalt der Blockcopolymeren wurde mittels IR-Spektroskopie ermittelt.

Das zahlenmittlere Molekulargewicht Mₙ und die Polydispersität PDI wurden mittels Gelpermeationschromatographie (GPC) relativ zu Polystyrolstandards ermittelt.

Der Hydriergrad der aromatischen, ungesättigten Bindungen wurde durch Vergleich der UV-Signalintensitäten der GPC-Diagramme von Proben vor und nach der Hydrierung bestimmt. Der Hydriergrad der Doppelbindungen der Dieneinheiten betrug in allen Beispielen über 99 %.

Der Molekulargewichtsabbau wurde durch Vergleich der RI-Signalintensitäten der GPC-Diagramme von Proben vor und nach der Hydrierung ermittelt.

Die Blockcopolymeren weisen vor und nach der Hydrierung zwei Glastemperaturübergänge T_{g} für die Weich- und Hartphase auf, welche durch DSC-Messungen im Bereich von - 100°C bis 230°C bestimmt wurden.

Die hydrierten Blockcopolymeren wurden bei 200°C und einen Druck von 200 bar aufgeschmolzen und zu Platten verpresst, aus denen Zugteststäbe herausgearbeitet wurden.

Sekantenmodul, Zugfestigkeit und Reissdehnung wurden an Zugteststäben (Kleinstäben des Typ 4, ISO 8256) in Anlehnung an ISO 527-2 ermittelt.

Die Erweichungstemperatur (Vicat-B) wurde nach ISO 306 (1994) bestimmt, die Shore D Härte nach DIN 53505.

Die Transmissionswerte wurden an gepressten Platten der Schichtdichte 1 mm ermittelt.

### Beispiele 1-6:

### Lineare Styrol-Butadien-Blockcopolymere

Die Synthesen der in Tabelle 2 zusammengestellten, asymmetrischen linearen Blockcopolymeren wurden in 10 l Rührkessel unter Standard-Inertisierungstechniken durchgeführt. Zunächst wurden 4790 ml trockenes Cyclohexan in den Kessel vorgelegt und auf 50°C aufgeheizt. Nach Zugabe einer vorher berechneten Menge sekundär-Butyllithium (1,5 mol/l) und Tetrahydrofuran (0,4 Vol.% bezogen auf die Menge Cyclohexan) wurde die Lösung weitere 5 Minuten gerührt. Zum Blockaufbau wurden portionsweise wasserfreies Styrol, Butadien und zum Aufbau eines Copolymerblocks gleichzeitig wasserfreies Styrol und Butadien nacheinander in die Reaktionslösung gegeben. Dabei betrug die Reaktionszeit zum Aufbau eines Styrolblocks 15 Minuten, die eines Butadienblocks sowie die eines Styrol-Butadien Copolymerblocks 40 Minuten. Die Polymerisation wurde durch Zugabe von 3 ml Isopropanol beendet. Die Stabilisierung erfolgt durch Zugabe von 0,1 % (bezogen auf den Feststoffgehalt des Blockcopolymers) Kerobit TBK (2,6-Di-tert.-butyl-p-kresol).

**Tabelle 2**

| Bsp | Blockaufbau | S₁[g] | S₂[g] | B₁[g] | (S/B)₁ [g] | (S/B)₂ [g] | s.BuLi 1,5 5 mol/l [mL] | Butadien-gehalt¹ [%] | Anteil 1,2-Verknüpfung im Polybutadien-block¹ [%] | Mn₂ | PDI² | Tg³ [°C] |
|---|---|---|---|---|---|---|---|---|---|---|---|---|
| 1 | S₁-B₁-(S/B)₁-S₁ | je 497 | - | 313 | 159/90 | - | 6,6 | 23 | 50 | 174000 | 1,17 | -57/96 |
| 2 | S₁-B₁-(S/B)₁-S₂ | 704 | 230 | 346 | 179/92 | - | 8,5 | 27 | 47 | 127000 | 1,15 | -57/96 |
| 3 | S₁-B₁-S₂ | 830 | 415 | 284 | - | - | 7,9 | 14 | 57 | 151000 | 1,18 | -54/98 |
| 4 | S₁-B₁-S₂ | 914 | 343 | 309 | - | - | 15,2 | 17 | 51 | 81000 | 1,11 | -72/98 |
| 5 | S₁-(S/B)₁-(S/B)₂-S₂ | 725 | 235 | - | 165/74 | 118/265 | 7,8 | 20 | 46 | 132000 | 1,15 | -38/96 |
| 6 | S₁-B₁-(S/B)₁-S₂ | 707 | 204 | 293 | 258/139 | - | 8,6 | 27 | 42 | 147000 | 1,10 | -50/102 |

### Beispiele 7-12:

### Sternförmige Styrol-Butadien-Blockcopolymere

Zur Synthese der in Tabelle 3 und 4 zusammengestellten sternförmigen, asymmetrischen Blockcopolymeren wurden 4790 ml trockenes Cyclohexan unter inerten Bedingungen in einen 10 l Rührkessel vorgelegt und auf 50°C erwärmt. Nach Zugabe einer vorher berechneten Menge sekundär Butyllithium (1,5 mol/l) sowie 0,4 Vol.-% Tetrahydrofuran wurde die Reaktionslösung weitere 5 Minuten gerührt.

Nach der ersten Zugabe einer vorher bestimmten Menge wasserfreies Styrol zum Aufbau des S₁-Blockes und 15 Minuten Reaktionszeit, wurde weitere Initiatorlösung (sekundäres Butyllithium) zum Start weiterer Ketten hinzugefügt. Der weitere Blockaufbau erfolgt durch portionsweise Zugabe von wasserfreiem Styrol, Butadien und zum Aufbau eines Copolymerblocks durch gleichzeitige Zugabe von wasserfreiem Styrol und Butadien. Die Reaktionszeit zum Aufbau eines Styrolblocks betrug 15 Minuten, die eines Butadienblocks sowie die eines Styrol-Butadien Copolymerblocks 40 Minuten. Die Copolymerblöcke wurden durch Zugabe von Endenol D 82 (Fa. Henkel KGaA, 40%ige Lösung in Toluol) bei 50°C innerhalb von 15 Minuten zum Sternblockcopolymer gekoppelt. Die Stabilisierung erfolgte durch Zugabe von 0,1 % (bezogen auf den Feststoffgehalt des sternförmigen Blockcopolymers) Kerobit TBK (2,6-Di-tert.-butyl-p-kresol).

**Tabelle 3:**

| Bsp. | Blockaufbau | Initiatorverhältnis | Butadiengehalt [%] | Anteil 1,2-Verknüpfung im Polybutadien [%] | Mn | PDI | Tg [°C] |
|---|---|---|---|---|---|---|---|
| 7 | S₁-S₂-B₁-X-B₁-S₂ | 1:3,5 | 39 | 41 | 79500 | 1,88 | -69/91 |
| 8 | S₁-S₂-B₁-S₃-X-S₃-B₁-S₂ | 1:3,5 | 32 | 36 | 88600 | 1,90 | -60/88 |
| 9 | S₁-S₂-(S/B)₁-B₁-X-B₁-(S/B)₁-S₂ | 1:3,5 | 37 | 41 | 124000 | 2,01 | -68/72 |
| 10 | S₁-S₂-(S/B)₁-B₁-X-B₁-(S/B)₁-S₂ | 1:1 | 36 | 41 | 155100 | 1,87 | -65/91 |
| 11 | S₁-S₂-(S/B)₁-(S/B)₂-X-(S/B)₂-(S/B)₁-S₂ | 1:3,5 | 36 | 37 | 123800 | 2,00 | -33/72 |
| 12 | S₁-S₂-(S/B)₁-X-(S/B)₁-S₂ | 1:1 | 26 | 36 | 82600 | 1,86 | -32/103 |

**Tabelle 4**

| Bsp. | S₁[g] | S₂[g] | B₁[g] | S₃[g] | (S/B)₁ [g] | (S/B)₂ [g] | s.-BuLi 1 1,5 mol/l [mL] | s.-BuLi 2 1,5 mol/l [mL] |
|---|---|---|---|---|---|---|---|---|
| 7 | 492 | 443 | 619 | - | - | - | 5,1 | 17,9 |
| 8 | 492 | 443 | 533 | 246 | - | - | 5,1 | 17,9 |
| 9 | 372 | 335 | 357 | - | 279/151 | - | 4,1 | 14,5 |
| 10 | 500 | 300 | 400 | - | 225/150 | - | 9,2 | 9,2 |
| 11 | 329 | 311 | - | - | 243/124 | 195/399 | 4,4 | 15,6 |
| 12 | 460 | 414 | - | - | 242/387 | - | 5,1 | 19,9 |

### Beispiele 13-24:

Die Ergebnisse der Hydrierung der Blockcopolymeren aus den Beispielen 1-12 sind in Tabelle 5 zusammengestellt.

### Herstellung des Hydrierkatalysators (5 % PT auf Aktivkohle)

2,09 kg (ber. Trockenmasse) Aktivkohle (Norit SX Plus) wurden in 16,72 kg vollentsalztem Wasser unter Rühren aufgeschlämmt. Hierzu wurde ein Lösung von 0,1864 kg Pt-II-Nitrat, enthaltend 0,110 kg Pt, in 2,140 kg vollentsalztem Wasser gegeben. Die Suspension wurde unter Rühren auf 50°C erwärmt. Zur Reduktion des Platins wurden nun 3,136 l einer 5 %-igen Hydrazinhydratlösung zugegeben und für weitere 30 min bei 50°C gerührt. Anschließend wurde abgekühlt, filtriert und mit Wasser nitratfrei gewaschen (Leitfähigkeit > 20 µS). Der Katalysator wurde anschließend im Vakuum-Trokkenschrank bei 110°C für 54 h getrocknet.

### Durchführung im 20 l Autoklav (Hydrierbedingung A)

13,3 l einer 5%igen Polymerlösung in Cyclohexan wurden in den Autoklav eingefüllt. 135 g des Katalysators (5% Pt/C Hydrierkatalysator) wurden vorsichtig zugegeben. Nach einer Druckprüfung wurde zunächst Wasserstoff bis zu einem Druck von 50 bar aufgepreßt und die Temperatur auf 220°C erhöht. Danach wurde stufenweise der Wasserstoffdruck bis 250 bar eingestellt. Nach Erreichen des Betriebsdruckes beginnt die Hydrierzeit von 48 Stunden. Zwischendurch abfallender Druck wurde durch Nachpressen von Wasserstoff korrigiert. Nach Beendigung der Hydrierzeit wurde die Suspension mittels Überdruck ausgetragen. Das Abfiltrieren des Katalysatores erfolgte mittels einer Druckfilternutsche.

### Durchführung im 5 l Autoklav (Hydrierbedingung B)

3,3 l bzw. einer 6%igen Polymerlösung (3% in Beispiel 21) in Cyclohexan werden in den jeweiligen Autoklaven gefüllt. 41 g des Hydrierkatalysators (5% Pt/C,) wurden vorsichtig zugegeben. Nach einer Druckprüfung wurde zunächst Wasserstoff bis zu einem Druck von 50 bar aufgepreßt und die Temperatur bis 220°C erhöht. Danach wurde stufenweise der Wasserstoffdruck bis 250 bar eingestellt. Nach Erreichen des Betriebsdrucks beginnt die Hydrierzeit von 48 Stunden. Zwischendurch abfallender Druck wurde durch Nachpressen von Wasserstoff korrigiert. Nach Beendigung der Hydrierzeit wird die Suspension aus dem Druckbehälter geleert. Das Abfiltrieren des Katalysators erfolgte mittels einer Druckfilternutsche.

**Tabelle 5**

| Beispiel | Blockcopolymer aus Beisp. | Hydriergrad (aromat. Bindung en [%] | Molekulargewichtsabbau [%] | Sekantenmodul [GPa] | Zugfestigkeit [MPa] | Reissdehnung [%] | Tg [°C] | Vicat B [°C] | Shore D Härt | Transmission [%] | Hydrierbedingung [%] |
|---|---|---|---|---|---|---|---|---|---|---|---|
| 13 | 1 | 99,6 | 0,5 | 0,84 | 30,1 | 6,3 | -58/123 | 109 | - | >91,6 | B |
| 14 | 2 | 99,7 | 0,0 | 0,84 | 28,7 | 18,7 | -55/127 | 91 | 74 | >91,6 | A |
| 15 | 3 | 99,4 | 0,0 | 1,33 | 33,2 | 5,2 | -63/140 | 115 | 66 | >92,2 | B |
| 16 | 4 | 99,6 | 0,0 | 1,28 | 32,3 | 6,0 | -57/130 | 109 | 80 | >91,7 | B |
| 17 | 5 | 99,4 | 1,2 | | | | -43/127 | 93 | - | >91,0 | B |
| 18 | 6 | 99,9 | 0,0 | 0,69 | 23,6 | 105,5 | -50/133 | 88 | 68 | >91,6 | A |
| 19 | 7 | 98,9 | 0,0 | 0,52 | 16,8 | 157 | -56/120 | 80 | 70 | >89,9 | A |
| 20 | 8 | 99,7 | 5,1 | 0,56 | 33,1 | 165 | -54/124 | 83 | - | >92 | B |
| 21 | 9 | 99,6 | 3,9 | - | - | - | | | - | - | A |
| 22 | 10 | 99,2 | 0,0 | 0,48 | 16,3 | 390 | -50/129 | 57 | - | >88,9 | B |
| 23 | 11 | 99,0 | 7,8 | - | 0,7 | 615 | -31/107 | - | - | >89,7 | A |
| 24 | 12 | 99,4 | 7,0 | | - | | -32/130 | 115 | - | >90,9 | A |

### Beispiele 25-41:

### Blends aus Polycyclohexylethan und den hydrierten Blockcopolymeren der Beispiele 14-23

Zur Herstellung von Mischungen aus kernhydrierten Blockcopolymeren wurden 2 g (10 Gew.-%), 3,4 g (17 Gew.-%) bzw. 10 g (50 Gew.-%) nach Hydrierbedingung B aus Polystyrol PS 158 K der BASF AG erhaltenem Polycyclohexylethan (PCHE) mit 18 g, 16,6 g bzw. 10 g kernhydiertem Copolymer aus den Beispielen 14 - 23 in 200 ml Cyclohexan aufgelöst und bei Raumtemperatur gerührt. Das Lösungsmittel wurde anschließend im Vakuum bei 80°C vollständig entfernt und die Mischungen zu Pressplatten verarbeitet. Die Ergebnisse sind in Tabelle 5 zusammengestellt.

**Tabelle 6**

| Bsp. | Blockcopolymer aus Beisp. | PCHE Zusatz [%] | Sekantenmodul [GPa] | Zugfestigkeit [MPa] | Reissdehnung [%] | Tg (DSC) [°C] | Transmission³ [%] |
|---|---|---|---|---|---|---|---|
| 25 | 14 | 10 | 0,94 | 29,5 | 11 | 140 | >87,6 |
| 26 | 14 | 17 | 0,95 | 29,0 | 8 | 141 | >87,0 |
| 27 | 15 | 10 | 1,18 | 32,2 | 4 | 141 | >90,2 |
| 28 | 15 | 17 | 1,25 | 32,7 | 4 | 138 | >90,3 |
| 29 | 15 | 50 | 1,54 | - | 2 | - | >91,1 |
| 30 | 17 | 10 | 0,96 | 32,9 | 5 | 139 | >88,1 |
| 31 | 17 | 17 | 1,01 | 33,8 | 6 | 142 | >88,7 |
| 32 | 17 | 50 | 1,40 | - | 3 | 142 | >88,2 |
| 33 | 18 | 10 | 0,84 | 26,2 | 95 | 143 | >91,4 |
| 34 | 18 | 17 | 0,95 | 29,4 | 27 | 142 | >91,0 |
| 35 | 18 | 50 | 1,20 | - | 6 | 144 | >89,2 |
| 36 | 20 | 10 | 0,62 | 17,3 | 232 | 139 | >90,3 |
| 37 | 20 | 17 | 0,75 | 19,8 | 201 | 140 | >89,3 |
| 38 | 20 | 50 | 1,11 | - | 29,8 | 146 | >85,6 |
| 39 | 23 | 10 | 0,03 | - | 550 | 140 | >89,8 |
| 40 | 23 | 17 | 0,03 | - | 440 | 142 | >89,5 |
| 41 | 23 | 50 | 0,36 | - | 77 | 142 | >84,7 |

## Patentansprüche

1. Kernhydrierte Blockcopolymere aus vinylaromatischen Monomeren und Dienen, die mindestens zwei Blöcke S aus vinylaromatischen Monomeren aufweisen, **dadurch gekennzeichnet, daß** sie einen Block S₁ mit einem Molekulargewicht Mₙ von mindestens 30.000 g/mol und einen Block S₂ mit.einem Molekulargewicht Mₙ im Bereich von 5.000 bis 25.000 g/mol aufweisen.

2. Kernhydrierte Blockcopolymere nach Anspruch 1, **dadurch gekennzeichnet, daß** sie einen Block S₁ mit einem Molekulargewicht Mₙ im Bereich von 30.000 g/mol bis 100.000 g/mol und einen Block S₂ mit einem Molekulargewicht Mₙ im Bereich von 10.000 bis 25.000 g/mol aufweisen.

3. Kernhydrierte Blockcopolymere nach Anspruch 1 oder 2, **dadurch gekennzeichnet, daß** der Hydrierungsgrad der vinylaromatischen Monomereinheiten mindestens 90% beträgt.

4. Kernhydrierte Blockcopolymere nach einem der Ansprüche 1 bis 3, **dadurch gekennzeichnet, daß** der Anteil der Dieneinheiten vor der Hydrierung höchstens 50 Gew.-%, bezogen auf das gesamte Blockcopolymer, beträgt.

5. Kernhydrierte Blockcopolymere nach einem der Ansprüche 1 bis 4, **dadurch gekennzeichnet, daß** die einpolymerisierte Dieneinheiten vor der Hydrierung zu mehr als 30 %, bezogen auf die Summe der Dieneinheiten, in der 1,2-Vinylform vorliegen.

6. Kernhydrierte Blockcopolymere nach einem der Ansprüche 1 bis 5, **dadurch gekennzeichnet, daß** sie vor der Hydrierung einen Copolymerblock (S/B) aus vinylaromatischen Monomeren und Dienen mit statistischer Verteilung ausweisen.

7. Kernhydrierte Blockcopolymere nach einem der Ansprüche 1 bis 6, **dadurch gekennzeichnet, daß** sie aus Styrol als vinylaromatischem Monomer und Butadien oder Isopren als Dien aufgebaut sind.

8. Mischungen, enthaltend
a) 10 bis 90 Gew.-% kernhydrierte Blockcopolymere nach einem der Ansprüche 1 bis 5 und
b) 90 bis 10 Gew.-% kernhydriertes Polystyrol.

9. Verfahren zur Herstellung von kernhydrierten Blockcopolymeren, nach Anspruch 1 umfassend die Schritte:
a) sequentielle anionische Polymerisation der vinylaromatischen Monomeren und Dienen mit einem lithiumorganischen Inititator,
b) Terminierung der Polymerisation mit einem protischen Terminierungsmittel oder einem Kopplungsmittel,
c) Hydrierung des erhaltenen Blockcopolymeren mit einem Hydrierkatalysator.

10. Verfahren nach Anspruch 9, **dadurch gekennzeichnet, daß** der Schritt a) in einem cycloaliphatischen Kohlenwasserstoffes als Lösungsmittel und in Gegenwart von 0,3 bis 0,5 Volumenprozent, bezogen auf das Lösungsmittel, eines Ethers durchgeführt wird.

11. Verwendung der Blockcopolymeren gemäß den Ansprüchen 1 bis 7 oder der Mischung gemäß Anspruch 8 für optische Medien.

## Claims

1. A ring-hydrogenated block copolymer composed of vinylaromatic monomers and dienes, which has at least two S blocks composed of vinylaromatic monomers, which has an S₁ block whose molar mass Mₙ is at least 30 000 g/mol, and has an S₂ block whose molar mass Mₙ is in the range from 5000 to 25 000 g/mol.

2. The ring-hydrogenated block copolymer according to claim 1, which has an S₁ block whose molar mass Mₙ is in the range from 30 000 g/mol to 100 000 g/mol and has an S₂ block whose molar mass Mₙ is in the range from 10 000 to 25 000 g/mol.

3. The ring-hydrogenated block copolymer according to claim 1 or 2, wherein the degree of hydrogenation of the vinylaromatic monomer units is at least 90%.

4. The ring-hydrogenated block copolymer according to any of claims 1 to 3, wherein the proportion of the diene units prior to the hydrogenation process is at most 50% by weight, based on the entire block copolymer.

5. The ring-hydrogenated block copolymer according to any of claims 1 to 4, wherein, prior to the hydrogenation process, at least 30% of the copolymerized diene units, based on all of the diene units, are present in the 1,2-vinyl form.

6. The ring-hydrogenated block copolymer according to any of claims 1 to 5, which, prior to the hydrogenation process, has a copolymer block (S/B) composed of vinylaromatic monomers and of dienes with random distribution.

7. The ring-hydrogenated block copolymer according to any of claims 1 to 6, which is composed of styrene as vinylaromatic monomer and butadiene or isoprene as diene.

8. A mixture comprising
a) from 10 to 90% by weight of ring-hydrogenated block copolymers according to any of claims 1 to 5, and
b) from 90 to 10% by weight of ring-hydrogenated polystyrene.

9. A process for preparing ring-hydrogenated block copolymers according to claim 1, comprising the steps of:
a) sequential anionic polymerization of the vinylaromatic monomers and dienes, using an organolithium initiator,
b) terminating the polymerization, using a protic terminator or a coupling agent, and
c) hydrogenating the resultant block copolymers, using a hydrogenation catalyst.

10. The process according to claim 9, wherein step a) is carried out in a cycloaliphatic hydrocarbon as solvent, and in the presence of from 0.3 to 0.5 percent by volume, based on the solvent, of an ether.

11. The use of the block copolymers according to any of claims 1 to 7, or of the mixture according to claim 8, for optical media.

## Revendications

1. Copolymères séquencés à noyau hydrogéné constitués de monomères vinylaromatiques et de diènes qui présentent au moins deux séquences S de monomères vinylaromatiques, **caractérisés en ce qu'**ils présentent une séquence S₁ d'un poids moléculaire Mₙ d'au moins 30 000 g/mole et une séquence S₂ d'un poids moléculaire Mₙ dans la plage de 5 000 à 25 000 g/mole.

2. Copolymères séquencés à noyau hydrogéné selon la revendication 1, **caractérisés en ce qu'**ils présentent une séquence S₁ d'un poids moléculaire Mₙ dans la plage de 30 000 g/mole à 100 000 g/mole et une séquence S₂ d'un poids moléculaire Mₙ dans la plage de 10 000 à 25 000 g/mole.

3. Copolymères séquencés à noyau hydrogéné selon la revendication 1 ou 2, **caractérisés en ce que** le degré d'hydrogénation des unités monomères vinylaromatiques est d'au moins 90%.

4. Copolymères séquencés à noyau hydrogéné selon l'une quelconque des revendications 1 à 3, **caractérisés en ce que** la fraction des unités diéniques est, avant hydrogénation, tout au plus de 50% en poids par rapport à l'ensemble du copolymère séquencé.

5. Copolymères séquencés à noyau hydrogéné selon l'une quelconque des revendications 1 à 4, **caractérisés en ce que** les unités diéniques polymérisées sont présentes, avant hydrogénation, à plus de 30% par rapport à la somme des unités diéniques, sous la forme 1,2-vinylique.

6. Copolymères séquencés à noyau hydrogéné selon l'une quelconque des revendications 1 à 5, **caractérisés en ce qu'**ils présentent, avant hydrogénation, une séquence copolymère (S/B) constituée de monomères vinylaromatiques et de diènes en proportion statistique.

7. Copolymères séquencés à noyau hydrogéné selon l'une quelconque des revendications 1 à 6, **caractérisés en ce qu'**ils sont constitués de styrène comme monomère vinylaromatique, et de butadiène.ou d'isoprène comme diène.

8. Mélanges comprenant :
a) 10 à 90% en poids de copolymères séquencés à noyau hydrogéné selon l'une quelconque des revendications 1 à 5 et
b) 90 à 10% en poids de polystyrène à noyau hydrogéné.

9. Procédé de fabrication de copolymères séquencés à noyau hydrogéné selon la revendication 1, comprenant les étapes suivantes :
a) la polymérisation anionique séquentielle des monomères vinylaromatiques et des diènes avec un initiateur d'organolithium,
b) la terminaison de la polymérisation avec un agent de terminaison protique ou un agent de couplage, et
c) l'hydrogénation du copolymère séquencé obtenu avec un catalyseur d'hydrogénation.

10. Procédé selon la revendication 9, **caractérisé en ce que** l'étape a) est réalisée dans un hydrocarbure cycloaliphatique comme solvant et en présence de 0,3 à 0,5 pour-cent en volume, par rapport au solvant, d'un éther.

11. Utilisation des copolymères séquencés selon les revendications 1 à 7 ou du mélange selon la revendication 8 pour des milieux optiques.
